# FASCICULE DE BREVET EUROPEEN

(11) **EP 0 895 919 B1**
(45) Date de publication et mention de la délivrance du brevet: **06.10.2004**
(21) Numéro de dépôt: 98440164.6
(22) Date de dépôt: 29.07.1998
(51) Int. Cl.: B62B 1/20

(54) **Véhicule de type brouette formé d'éléments prémontés pouvant être assemblés sans outils**
Schubkarrenartiges Fahrzeug aus vorgefertigten Elementen, die ohne Spezialwerkzeug zusammengesetzt werden können
Wheelbarrow type vehicle assembled from prefabricated elements without the use of special tooling

(30) Priorité: 08.08.1997 FR 9710304
(43) Date de publication de la demande: 10.02.1999
(73) Titulaire: HAEMMERLIN S.A., F-67700 Monswiller (FR)
(72) Inventeur: Haemmerlin, Bernard, 67700 Monswiller (FR)
(74) Mandataire: Nuss, Pierre

(56) Documents cités:
- EP-A- 0 522 987
- CH-A- 409 643
- FR-A- 1 313 595
- FR-A- 2 534 531
- FR-A- 2 717 761
- GB-A- 1 221 509
- GB-A- 2 135 249
- US-A- 2 742 300
- US-A- 4 471 996

## Description

La présente invention concerne les véhicules à brancards de type brouette, et plus particulièrement les structures formant les châssis de tels véhicules.

Un tel véhicule est décrit dans le document FR-A-2 717 761.

Pour simplifier la description qui va suivre, on se contentera ci-après de l'exemple de la brouette, bien que l'invention proprement dite soit également applicable à d'autres véhicules, tels que par exemple des engins à plateaux plats pour remplacer les caisses des brouettes, permettant de transporter par exemple des éléments empilables.

Les brouettes concernées par l'invention présentent la particularité d'être composées d'ensembles prémontés pouvant être agencés de manière à pouvoir gerber plusieurs véhicules lorsque lesdits ensembles sont démontés. Ce contexte particulier n'est pas sans incidence sur les choix techniques opérés pour aboutir aux solutions retenues.

En effet, la base de l'invention tient au fait que l'assemblage des différents ensembles prémontés se fait sans aucun outil, d'une manière extrêmement simple. Or, la conception des liaisons mécaniques adéquates pour répondre à ce problème s'est faite dans le cadre posé par l'exigence de gerbabilité précitée. Ce cadre restreint bien entendu la gamme des solutions possibles, car il impose une forme très particulière aux éléments prémontés, leur permettant notamment d'être combinés au cours de l'empilement.

Dans le passé, la déposante a déjà conçu une brouette démontable empilable par sous-éléments prémontés. Cette brouette a notamment fait l'objet d'un brevet déposé le 24 mars 1994 sous le numéro FR 94 03634 et publié sous le numéro FR 2 717 761. Elle est constituée par un ensemble caisse et brancards reliés entre eux par l'intermédiaire d'une infrastructure, par un ensemble pieds et paliers de roues, ces deux ensembles étant reliés de manière démontable.

Toutefois, au cours de l'assemblage, comme lors du démontage, il est nécessaire de recourir à au moins un outil, et il faut procéder à une opération de boulonnage / déboulonnage d'au moins deux boulons. En effet, l'ensemble comprenant les pieds de la brouette comprend un moyen de blocage transversal se présentant sous la forme d'une traverse de type étrier, que l'utilisateur fixe à ses deux extrémités à la structure constituant lesdits pieds au moyen de boulons classiques.

Le but essentiel de la présente invention est de supprimer toute manoeuvre de montage fastidieuse et de permettre à l'inverse un assemblage quasi immédiat de la brouette ou équivalent. Comme on ra mentionné, cet objectif ne doit évidemment pas remettre en cause la gerbabilité des brouettes démontées.

Un autre objectif de l'invention est de permettre son démontage, notamment à des fins de transport, sans recourir à des opérations de déboulonnage, nécessitant un outil particulier calibré pour les éléments mécaniques utilisés. Ainsi, la brouette de l'invention, si elle nécessite bien un outil de démontage, se satisfait d'une large gamme d'outils non spécifiques, car remplissant une fonction basique quasi universelle, celle du levier.

Pour résumer, l'invention concerne un véhicule à brancards de type brouette, formé d'ensembles prémontés, pouvant être agencés à l'état démonté de manière à pouvoir gerber plusieurs véhicules avec un gain de place maximal, ou être assemblés de manière à rendre le véhicule fonctionnel, comportant un premier ensemble constitué d'une part d'un élément destiné à contenir ou à supporter une charge à transporter, et d'autre part une première structure supportant ledit élément et formant lesdits brancards, et un second ensemble comportant une seconde structure munie de pieds d'appui et à laquelle est fixable d'une façon amovible au moins une roue, lesdits ensembles étant solidarisables par l'utilisateur au moyen de liaisons mécaniques dont la mise en oeuvre s'effectue sans l'apport d'outils.

Plus précisément, chacune desdites structures comporte un élément tubulaire d'un seul tenant cintré symétriquement par rapport à son axe central longitudinal, et doté d'une paire de traverses transversales destinées à coopérer avec les traverses transversales correspondantes de l'autre desdites structures.

Conformément à l'invention, l'un des couples de traverses destinées à coopérer permet, lorsque leur liaison mécanique est établie, un pivotement relatif restreint desdites structures, l'autre couple comportant une première traverse dotée d'un élément élastique permettant le clipsage de la seconde traverse pour l'établissement de leur liaison mécanique.

En réalité, la traverse transversale de la première structure, située à proximité des brancards lorsque le véhicule est fonctionnel, est un profilé en L dont la branche d'allure perpendiculaire au fond de l'élément destiné à supporter ou à contenir une charge est recourbée au niveau de son chant distal dudit fond, la gouttière ainsi obtenue permettant de loger une traverse transversale plane reliant les extrémités de l'élément tubulaire de la seconde structure.

Cette liaison mécanique simple permet la solidarisation relative des deux structures, lorsque le second couple n'est pas encore en phase de liaison, et autorise un mouvement de pivotement restreint permettant de débuter la solidarisation dudit second couple. Lorsque celle-ci est réalisée, la solidarisation mécanique du premier couple est du même coup achevée, et il n'y a plus de mouvements relatifs possibles, à part un léger jeu fonctionnel.

Pour que les structures puissent s'agencer correctement l'une par rapport à l'autre, ladite branche d'allure perpendiculaire au fond est centrée par rapport à l'élément tubulaire de la première structure, laissant subsister à chacune de ses extrémités axiales proches dudit élément tubulaire un espace au moins égal au diamètre du tube de la seconde structure.

Ladite seconde structure, par l'intermédiaire de son élément tubulaire périphérique, vient en effet se loger à l'intérieur du périmètre défini par l'élément tubulaire de la première structure, sous le fond de l'élément destiné à contenir ou supporter la charge à transporter.

La seconde liaison mécanique entre traverses, réalisant de fait un verrouillage mécanique, est un peu plus complexe.

Ainsi, la traverse transversale de la première structure située à proximité de la ou des roues lorsque le véhicule est fonctionnel comporte d'une part une branche fixée au fond de l'élément destiné à supporter ou à contenir une charge et désutre part une branche d'allure perpendiculaire audit fond, élastiquement déformable, destinée à permettre le clipsage et le déclipsage de la traverse transversale correspondante de la seconde structure.

De préférence, cette branche d'allure perpendiculaire au fond comprend une portion sensiblement perpendiculaire audit fond surmontée d'une paire d'ailes inclinées, disposées symétriquement par rapport à l'axe central longitudinal du véhicule, formant surface de guidage de la traverse de l'autre structure vers des portions sensiblement parallèles au fond, reliant lesdites ailes et ladite portion perpendiculaire au fond, et destinée à verrouiller la liaison.

Pour faciliter le guidage, notamment au moment du verrouillage, les portions perpendiculaires et parallèles au fond, ainsi que lesdites ailes, sont reliées par des portions arrondies.

Le pivotement permis par le premier couple de traverse positionne en fait le second couple de manière qu'ils puissent enclencher leur coopération en vue de leur solidarisation finale. Il y a donc un ordre à respecter dans l'assemblage des ensembles prémontés. La traverse transversale qui pivote entre en contact avec les ailes inclinées de guidage, qu'elle repousse jusqu'à aboutir à l'arrondi reliant lesdites ailes à la portion parallèle au fond. A cet endroit, elle exerce une force dont la composante parallèle audit fond lui permet de déplacer la branche élastique de l'autre traverse, de manière à opérer le verrouillage.

En effet, alors que sur la portion inclinée des ailes, ladite force a une composante perpendiculaire au fond prépondérante, du fait de la géométrie desdites ailes, la composante parallèle au fond grandit et devient bien supérieure à la composante précitée au voisinage de l'arrondi, qui permet le verrouillage du fait de l'élasticité mentionnée.

Lesdites ailes sont séparées par une échancrure permettant l'insertion, entre les deux traverses mécaniquement liées, d'un outil quelconque allongé faisant office de levier et permettant de déverrouiller la liaison entre lesdites traverses à nouveau par déformation élastique de la traverse de la première structure.

L'échancrure en question permet simplement de libérer l'accès à la zone de contact entre les deux traverses en position verrouillée, dans sa partie perpendiculaire au fond. L'insertion d'un outil allongé, faisant levier, permet de séparer les traverses, en jouant notamment à nouveau sur l'élasticité de l'une.

Pour les mêmes raisons qu'auparavant, la branche d'allure perpendiculaire au fond de la traverse transversale de la première structure est centrée par rapport à l'élément tubulaire de ladite structure, un espace subsistant à chacune de ses extrémités axiales au voisinage de l'élément tubulaire, de longueur au moins égal au diamètre du tube de la seconde structure.

A cet endroit également, la seconde structure est incluse dans le périmètre défini par le tube de la première structure.

De préférence, pour faciliter la liaison mécanique entre les deux traverses qui se clipsent, la traverse transversale de la seconde structure coopérant avec la traverse élastique de clipsage est un profilé en L.

De préférence encore, les traverses sont réalisées en tôle métallique qui peuvent être découpées, embouties et pliées pour leur donner leur forme fonctionnelle finale.

L'ensemble des détails de conception des éléments de l'invention va à présent être décrit de manière plus détaillée, en référence aux figures annexées, pour lesquelles :
- la figure 1 est une vue de face schématique d'une brouette de l'invention ;
- la figure 2 est une vue en perspective d'une brouette retournée, de manière à avoir un accès visuel aux parties essentielles de l'invention ;
- la figure 3 représente une vue également en perspective de la traverse de clipsage élastique ;
- la figure 4 en est une vue en section ;
- la figure 5 est également une vue en section de la traverse de la première structure située à l'autre extrémité du fond ;
- la figure 6 montre l'agencement des structures pour deux brouettes en voie de gerbage ; et
- la figure 7 représente ces brouettes en position gerbée.

Dans toutes les figures, les mêmes références désignent les mêmes organes de l'exemple illustré par leur intermédiaire.

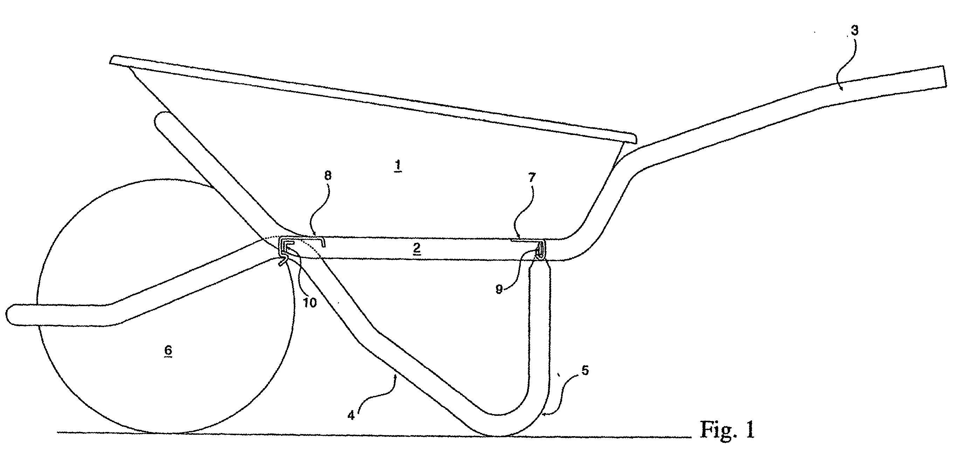

Ainsi, en figure 1, la brouette comporte de manière essentielle une caisse (1), une première structure (2) comportant les brancards (3) et une seconde structure (4) comportant des pieds d'appui (5) et au moins une roue (6). La présente invention ayant plus spécifiquement trait aux structures (2) et (4), les autres composants ne seront pas expliqués en détails dans la suite. Il en va par exempte ainsi de la ou des roues (6), dont on ne s'intéressera pas à la structure propre, non plus qu'à son ou leur mode de fixation à la structure (4).

Cette figure fait apparaître de manière schématique les traverses reliant les éléments tubulaires formant la partie principale des structures (2) et (4), lesdits éléments tubulaires étant à ce titre identifiés aux structures pour ce qui concerne les références. Ces traverses sont représentées en section, ce qui donne une première idée de leur coopération mécanique lorsque la brouette est opérationnelle, comme c'est le cas sur la figure 1.

Les deux traverses (7, 8) de la structure (2) sont plus volumineuses que les traverses (9, 10) de la structure (4), car elles remplissent en fait une fonction supplémentaire. En effet, outre leur rôle dans l'engagement mécanique avec les traverses correspondantes de la structure (4), elles permettent la fixation de la caisse (1) à la structure (2).

Elles sont soudées à leurs extrémités axiales au périmètre tubulaire de la structure (2), et par exemple vissées à la caisse (1), via leur portion au contact de ladite caisse (1).

Comme on le verra plus en détail dans la suite, la partie recourbée de la traverse transversale (7) loge la traverse (9), lui permettant un débattement à pivotement lorsque l'autre liaison mécanique n'est pas établie.

De même, la traverse (10) se verrouille dans la traverse (8) après action sur la zone d'extrémité apparaissant ici en forme de crochet de ladite traverse (8).

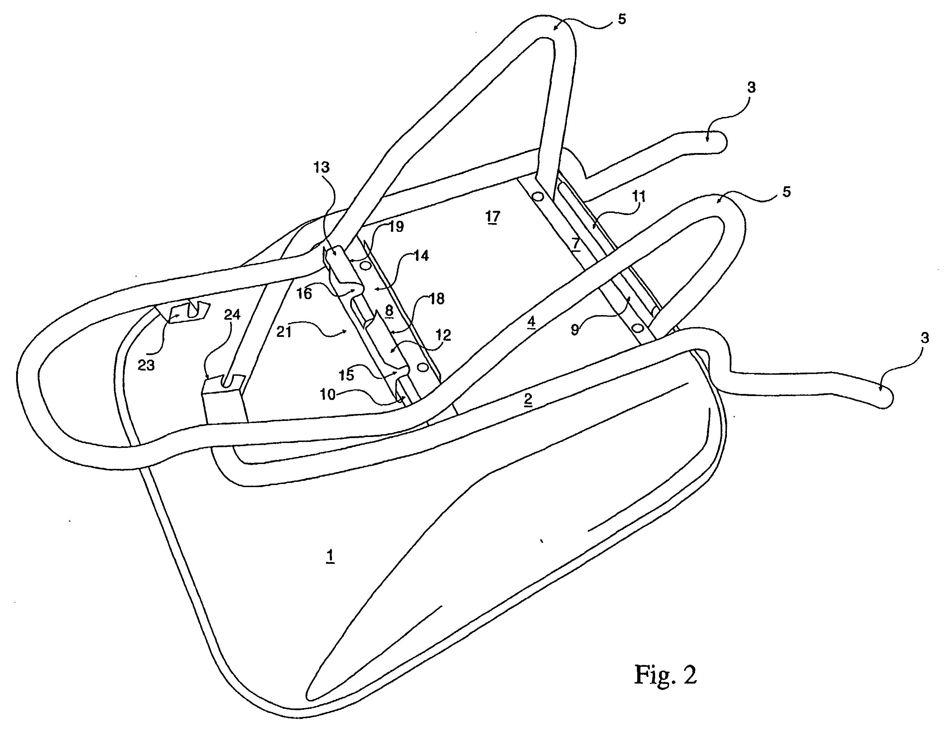

En référence à la figure 2, on voit plus nettement la forme des traverses transversales, et plus spécifiquement de la traverse élastique (8). La liaison de pivotement temporaire se trouve établie par la traverse plane (9), laquelle rejoint les extrémités libres de la structure (4), auxquelles elle est soudée. La partie recourbée (11) de la traverse (7) laisse subsister deux espaces à ses extrémités axiales, de sorte que les deux branches de la structure (4) puissent prendre place.

La forme relative des deux traverses (7, 9) n'est en principe pas conçue pour réaliser une liaison de pivotement. Néanmoins, du fait qu'elle est établie en premier, et qu'elle comporte un jeu fonctionnel, elle permet le positionnement de la traverse (9) par rapport à la traverse (7) et donc par rapport au bâti et, pour aboutir à établir la seconde liaison, fonctionne de facto en axe de pivotement.

La figure 2 représente également particulièrement clairement la forme de la traverse (8), avec ses deux ailes (12, 13) symétriques placées de part et d'autre de l'échancrure (14). Lesdites ailes (12, 13) comportent une surface inclinée reliée à une portion (15, 16) parallèle au fond (17) de la caisse (1) via une portion arrondie (18, 19).

Lorsque la traverse en L (10) de la seconde structure, en fin de mouvement de pivotement, vient au contact des ailes (12, 13), elle exerce une force dont la résultante peut être divisée en deux composantes, l'une étant parallèle au fond (17) alors que l'autre lui est perpendiculaire. La force parallèle s'exerce vers la ou les roues (6), de sorte que lesdites ailes (12, 13), et plus généralement la branche (21) perpendiculaire au fond (17), sont repoussés vers l'avant. Le profilé en L (10) tend ensuite à se rapprocher des zones arrondies (18, 19).

Du fait du changement de géométrie de la surface d'appui des ailes (12, 13), devenant de plus en plus perpendiculaire au fond à mesure que l'on s'approche desdites zones arrondies (18, 19), l'importance relative des composantes de ladite force se modifie, à tout le moins pour ce qui concerne leur intensité : la composante parallèle au fond devient bien supérieure à l'autre, ce qui a pour effet d'accentuer le déplacement élastique de la branche (21), puis de permettre le clipsage lorsque le point à tangente perpendiculaire au fond des zones arrondies (18, 19) est dépassé.

De part et d'autre de ladite branche (21), l'espace résiduel est suffisant pour que les tubulures de la seconde structure (4) puissent prendre place.

L'échancrure médiane (14) permet le passage d'un levier de forme allongée, une tige fine quelconque, voire un outil dévoyé comme un tournevis, pour écarter la branche verticale (21) du profilé en L, et permettre un déplacement élastique de ladite branche (21) libérant la traverse (10) en profilé en L.

La seconde structure (4) comporte deux supports (23, 24) de fixation de la roue (6), connus en soi, et qui ne font pas l'objet de la présente invention. Ces supports sont disposés symétriquement à proximité de l'arrondi formant l'avant de la structure (4).

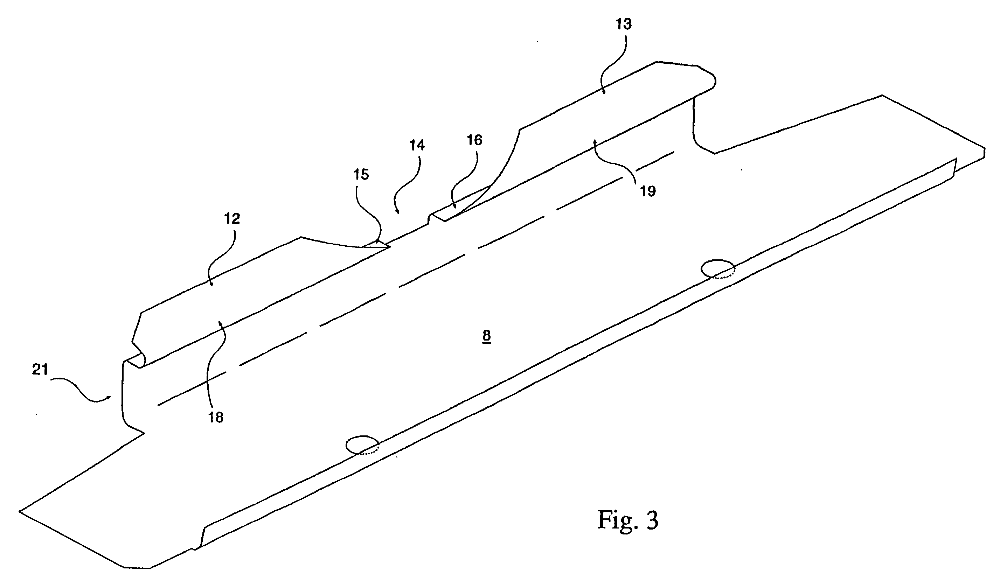

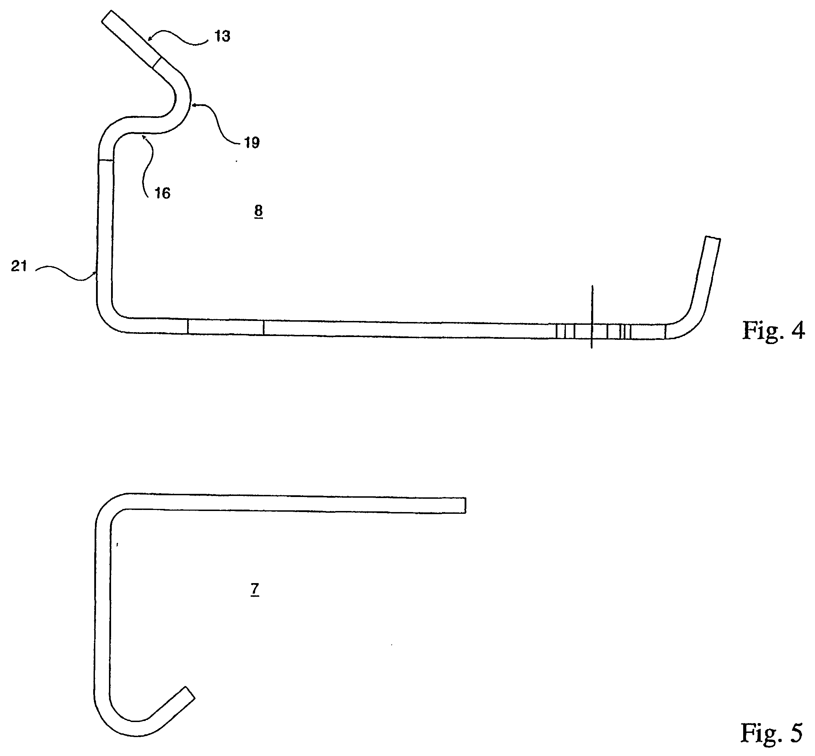

La figure 3 montre également en détail la traverse transversale 8, alors que la figure 4 en représente une coupe. Elles permettent de comprendre encore mieux l'action élastique de cette pièce, puisqu'elle est représentée sans interférence avec les autres éléments de la liaison comme à la figure 2. Il en va de même pour la figure 5, illustrant une possibilité de configuration de la traverse transversale (7). Tous les éléments de la structure (2) sont parfaitement identifiés.

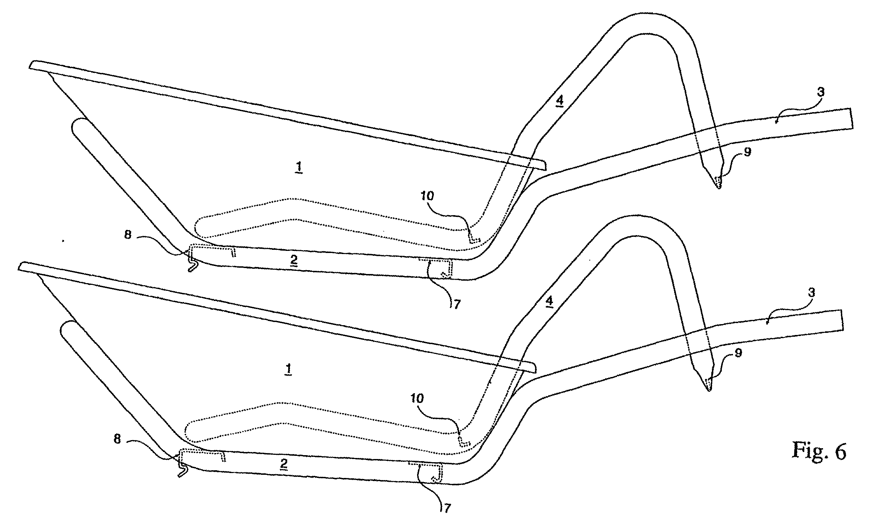

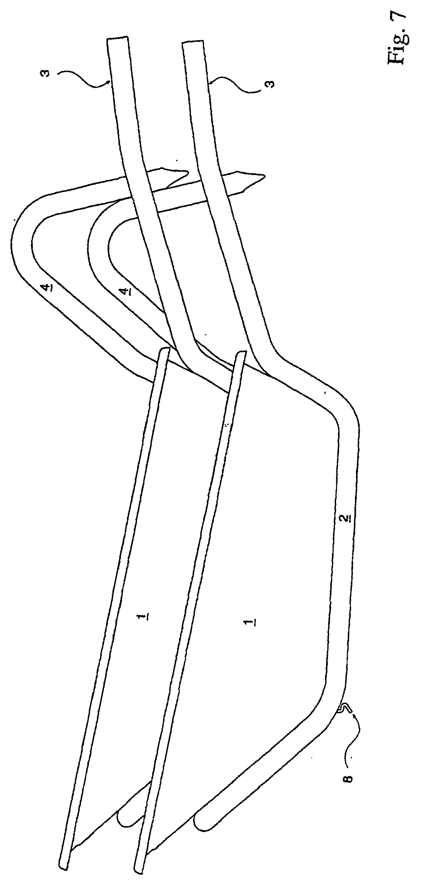

Les figures 6 et 7, à examiner en combinaison, expliquent le mode de gerbage, ainsi que l'agencement des ensembles prémontés lorsque la brouette est démontée. Les structures (4) sont au contact de l'intérieur de la caisse (1) d'une des brouettes, et de l'extérieur de la caisse (1) de la brouette contiguë.

Cela permet un empilement connu en soi, représenté en figure 7.

Les liaisons mécaniques décrites auparavant constituent un exemple possible de configuration pour l'invention. Des variantes sont cependant bien entendu possibles dans le cadre des revendications annexées.

## Revendications

1. Véhicule à brancards (3) de type brouette, formé d'ensembles prémontés, pouvant être agencés à l'état démonté de manière à pouvoir gerber plusieurs véhicules avec un gain de place maximal, ou être assemblés de manière à rendre le véhicule fonctionnel, comportant un premier ensemble constitué d'une part d'un élément (1) destiné à contenir ou à supporter une charge à transporter et, d'autre part, une première structure (2) supportant ledit élément (1) et formant lesdits brancards (3), et un second ensemble comportant une seconde structure (4) munie de pieds d'appui (5) et à laquelle est fixable d'une façon amovible au moins une roue (6), lesdits ensembles (2, 4) étant solidarisables par l'utilisateur au moyen de liaisons mécaniques dont la mise en oeuvre s'effectue sans l'apport d'outils, **caractérisé en ce que** chacune desdites structures (2, 4) comporte un élément tubulaire d'un seul tenant cintré symétriquement par rapport à son axe central longitudinal, et doté d'une paire de traverses transversales (7, 8 ; 9, 10) destinées à coopérer avec les traverses transversales (9, 10 ; 7, 8) correspondantes de l'autre desdites structures (4, 2), l'un des couples de traverses (7, 9) destinées à coopérer permettant, lorsque leur liaison mécanique est établie, un pivotement relatif restreint desdites structures (2, 4), l'autre couple comportant une première traverse (8) dotée d'un élément élastique (21) et permettant le clipsage de la seconde traverse (10) pour l'établissement de leur liaison mécanique.

2. Véhicule à brancards de type brouette selon la revendication 1, **caractérisé en ce que** la traverse transversale (7) de la première structure (2) située à proximité des brancards (3) lorsque le véhicule est fonctionnel est un profilé en L (7) dont la branche d'allure perpendiculaire au fond (17) de l'élément (1) destiné à supporter ou à contenir une charge est recourbée au niveau de son chant distal dudit fond, la gouttière (11) ainsi obtenue permettant de loger une traverse transversale plane (9) reliant les extrémités de l'élément tubulaire de la seconde structure (4).

3. Véhicule à brancards de type brouette selon la revendication précédente, **caractérisé en ce que** ladite branche d'allure perpendiculaire (7) au fond (17) est centrée par rapport à l'élément tubulaire de la première structure (2), laissant subsister à chacune de ses extrémités axiales proches dudit élément tubulaire (2) un espace au moins égal au diamètre du tube de la seconde structure (4).

4. Véhicule à brancards de type brouette selon l'une quelconque des revendications 1 à 3, **caractérisé en ce que** la traverse transversale (8) de la première structure (2) située à proximité de la ou des roues (6) lorsque le véhicule est fonctionnel comporte d'une part une branche fixée au fond (17) de l'élément (1) destiné à supporter ou à contenir une charge et d'autre part une branche (21) d'allure perpendiculaire audit fond (17), déformable élastiquement, destinée à permettre le clipsage et le déclipsage de la traverse transversale (10) correspondante de la seconde structure (4).

5. Véhicule à brancards de type brouette selon la revendication précédente, **caractérisé en ce que** ladite branche d'allure perpendiculaire au fond comprend une portion (21) sensiblement perpendiculaire audit fond (17) surmontée d'une paire d'ailes (12, 13) inclinées, disposées symétriquement par rapport à l'axe central longitudinal du véhicule, formant surface de guidage de la traverse (10) de l'autre structure (4) vers des portions (15, 16) sensiblement parallèles au fond (17), reliant lesdites ailes (12, 13) et ladite portion perpendiculaire (21) au fond (17), et destinée à verrouiller la liaison.

6. Véhicule à brancards de type brouette selon la revendication précédente, **caractérisé en ce que** les portions perpendiculaires (21) et parallèles (15, 16) au fond (17), ainsi que lesdites ailes (12, 13), sont reliées par des portions arrondies (18, 19).

7. Véhicule à brancards selon l'une des revendications 5 et 6, **caractérisé en ce que** lesdites ailes (12, 13) sont séparées par une échancrure (14) permettant l'insertion entre les deux traverses (8, 10) mécaniquement liées d'un outil allongé quelconque faisant office de levier, permettant de déverrouiller la liaison entre lesdites traverses (8, 10) par déformation élastique de la traverse (8) de la première structure (2).

8. Véhicule à brancards de type brouette selon l'une des revendications 4 à 7, **caractérisé en ce que** la branche (21) d'allure perpendiculaire au fond (17) de la traverse transversale (8) de la première structure (2) est centrée par rapport à l'élément tubulaire de ladite structure (2), un espace subsistant à chacune de ses extrémités axiales au voisinage de l'élément tubulaire, de longueur au moins égal au diamètre du tube de la seconde structure (4).

9. Véhicule à brancards de type brouette selon l'une quelconque des revendications 1 à 8, **caractérisé en ce que** la traverse transversale (10) de la seconde structure (4) coopérant avec la traverse de clipsage (8) est un profilé en L.

10. Véhicule à brancards de type brouette selon l'une quelconque des revendications 1 à 9, **caractérisé en ce que** les traverses (8, 10 ; 7, 9) sont des tôles métalliques.

## Patentansprüche

1. Fahrzeug mit Trageelementen (3) von der Art einer Schubkarre, bestehend aus vorgefertigten Bauelementen, die im zerlegten Zustand so angeordnet werden können, daß mehrere Fahrzeuge mit größtmöglichem Platzgewinn gestapelt werden können, oder so zusammengesetzt werden können, daß das Fahrzeug gebrauchsfertig ist, umfassend ein erstes Bauelement, das zum einen aufgebaut ist aus einem Element (1), das eine zu transportierende Last enthalten oder tragen soll, und zum andern aus einer ersten Struktur (2), die das Element (1) trägt und die Trageelemente (3) bildet, sowie ein zweites Bauelement, umfassend eine zweite Struktur (4), die mit Fußstützen (5) versehen ist und an der wenigstens ein Rad (6) abnehmbar befestigt werden kann, wobei die Bauelemente (2, 4) vom Anwender mittels mechanischer Verbindungen zusammengefügt werden können, deren Umsetzung ohne den Einsatz von Werkzeugen vor sich geht, **dadurch gekennzeichnet, daß** jede der Strukturen (2, 4) ein röhrenförmiges Element aus einem Stück umfaßt, das bezüglich seiner Mittellängsachse symmetrisch gebogen und mit einem Paar Querstreben (7, 8; 9, 10) versehen ist, die mit den entsprechenden Querstreben (9, 10; 7, 8) der jeweils anderen Struktur (4, 2) zusammenwirken sollen, wobei das eine Paar für die Zusammenwirkung vorgesehener Streben (7, 9) nach Herstellung der mechanischen Verbindung derselben eine begrenzte relative Drehung der Strukturen (2, 4) ermöglicht und das andere Paar, umfassend eine mit einem elastischen Element (21) versehene erste Strebe (8), das Einrasten der zweiten Strebe (10) zur Herstellung der mechanischen Verbindung derselben ermöglicht.

2. Fahrzeug mit Trageelementen von der Art einer Schubkarre nach Anspruch 1, **dadurch gekennzeichnet, daß** die Querstrebe (7) der ersten Struktur (2), die sich bei gebrauchsfertigem Fahrzeug in der Nähe der Trageelemente (3) befindet, ein Profil in Form eines L (7) ist, dessen senkrecht zum Boden (17) von Element (1), das eine Last tragen oder enthalten soll, verlaufender Abschnitt an seiner vom Boden entfernten Kante umgebogen ist, wobei die so erhaltene Rinne (11) die Aufnahme einer flachen Querstrebe (9) ermöglicht, die die Enden des röhrenförmigen Elements der zweiten Struktur (4) verbindet.

3. Fahrzeug mit Trageelementen von der Art einer Schubkarre nach vorstehendem Anspruch, **dadurch gekennzeichnet, daß** der senkrecht zum Boden (17) verlaufende Abschnitt (7) bezüglich des röhrenförmigen Elements der ersten Struktur (2) zentriert ist, so daß an jedem seiner axialen Enden in der Nähe des röhrenförmigen Elements (2) eine Lücke frei bleibt, die wenigstens gleich dem Durchmesser des Rohres der zweiten Struktur (4) ist.

4. Fahrzeug mit Trageelementen von der Art einer Schubkarre nach einem der Ansprüche 1 bis 3, **dadurch gekennzeichnet, daß** die Querstrebe (8) der ersten Struktur (2), die sich bei gebrauchsfertigem Fahrzeug in der Nähe des Rads bzw. der Räder (6) befindet, einerseits einen Abschnitt umfaßt, der am Boden (17) von Element (1) befestigt ist, das eine Last tragen oder enthalten soll, und andererseits einen senkrecht zum Boden (17) verlaufenden Abschnitt (21), der elastisch verformbar ist und der das Einrasten und Ausrücken der der zweiten Struktur (4) entsprechenden Querstrebe (10) ermöglichen soll.

5. Fahrzeug mit Trageelementen von der Art einer Schubkarre nach vorstehendem Anspruch, **dadurch gekennzeichnet, daß** der senkrecht zum Boden verlaufende Abschnitt einen zum Boden (17) im wesentlichen senkrechten Bereich (21) umfaßt, über dem sich ein Paar geneigte Flügel (12, 13) befinden, die bezüglich der Mittellängsachse des Fahrzeugs symmetrisch angeordnet sind und eine Führungsfläche der Strebe (10) der anderen Struktur (4) hin zu den zum Boden (17) im wesentlichen parallelen Bereichen (15, 16) bilden, die die Flügel (12, 13) und den zum Boden (17) senkrechten Bereich (21) verbinden und zur Arretierung der Verbindung vorgesehen sind.

6. Fahrzeug mit Trageelementen von der Art einer Schubkarre nach vorstehendem Anspruch, **dadurch gekennzeichnet, daß** der zum Boden (17) senkrechte Bereich (21) und die zum Boden parallelen Bereiche (15, 16) sowie die Flügel (12, 13) durch die gerundeten Bereiche (18, 19) miteinander verbunden sind.

7. Fahrzeug mit Trageelementen nach einem der Ansprüche 5 und 6, **dadurch gekennzeichnet, daß** die Flügel (12, 13) durch eine Aussparung (14) voneinander getrennt sind, die das Einfügen irgendeines länglichen Werkzeugs, das als Hebel fungiert, zwischen die beiden mechanisch verbundenen Streben (8, 10) ermöglicht, mit dem die Verbindung zwischen den Streben (8, 10) durch elastische Deformation der Strebe (8) der ersten Struktur (2) entarretiert werden kann.

8. Fahrzeug mit Trageelementen von der Art einer Schubkarre nach einem der Ansprüche 4 bis 7, **dadurch gekennzeichnet, daß** der zum Boden (17) senkrecht verlaufende Abschnitt (21) der Querstrebe (8) der ersten Struktur (2) bezüglich des röhrenförmigen Elements der Struktur (2) zentriert ist, wobei an jedem seiner axialen Enden in Nachbarschaft zum röhrenförmigen Element eine Lücke frei bleibt, deren Länge wenigstens gleich dem Durchmesser des Rohres der zweiten Struktur (4) ist.

9. Fahrzeug mit Trageelementen von der Art einer Schubkarre nach einem der Ansprüche 1 bis 8, **dadurch gekennzeichnet, daß** die Querstrebe (10) der zweiten Struktur (4), die mit der Einraststrebe (8) zusammenwirkt, ein Profil in Form eines L ist.

10. Fahrzeug mit Trageelementen von der Art einer Schubkarre nach einem der Ansprüche 1 bis 9, **dadurch gekennzeichnet, daß** die Streben (8, 10; 7, 9) Metallbleche sind.

## Claims

1. Wheeled appliances propelled manually by means of extended shafts used as handles, used to transport loads (3) of wheelbarrow type, formed by pre-assembled parts, which can be organized in a dismantled state so that several appliances can be stacked in order to gain maximum space or which can be assembled in such a way as to render the appliance functional, consisting of an initial section made up of one component (1) destined to contain or support (carry) a load to be transported and a second component, which is an essential preformed sub-frame structure (2) supporting the said element (1) and forming the said shafts or handles (3), and a second part consisting of a second structure (4) which has load supports which will touch the ground (5) and to which can be fixed, a wheel or wheels which are detachable when required (6) the afore mentioned parts (2,4) being attached together by the use of a mechanical link, which can be achieved without any tool. Each of these structures (2,4) consists of a tubular element of one symmetrically curved part compared to the central longitudinal axis with of a pair of transversal crossbars permanently attached (7,8,9,10) intended to work with the corresponding transversal crossbars (9,10,7,8) of the other afore mentioned structures (4,2) one of the pairs of crossbars (7,9) meant to work with and enabling once their mechanical link has been established, a pivoting of the afore said structures (2,4) the other pair comprising of a primary crossbar (8) with a flexible plate (21) which allows the engagement of the second crossbar (10) to establish their mechanically locked link.

2. Wheeled appliances propelled manually by means of extended shafts used as handles, used to transport loads such as wheelbarrows according to the claim [1] **characterized by** the transversal crossbar (7) of the primary structure (2) situated next to the shaft (3) when the appliance is working, has an 'L' shaped profile (7) which the perpendicular arm at the base (17) of the part (1) is designed to support or contain a load is bent to the level of the reciprocal component of the said base, the groove (4) thus obtained allows the placing of the flat transversal crossbar (9) linking the extremities of the tubular elements of the second structure (4)

3. Wheeled appliances propelled manually by means of extended shafts used as handles, used to transport loads of the wheelbarrows type, according to the previous claim, are **characterized by** the said perpendicular arm (7) at the base (14) being centred in relation to the tubular element of the primary structure (2) leaving a space at least equal to the diameter of tube of the second structure (4) each of the axial extremities close to the afore said tubular elements (2).

4. Wheeled appliances propelled manually by means of extended shafts used as handles, used to transport loads of the wheelbarrow type according to one of the claims, is **characterized by** the fact that the transverse crossbars (8) of the primary structure (2) is situated near to the wheel or wheels (6) when the appliance is in use, this consists of, on the one hand a fixed arm at the base (17) of the element (1) destined to support or contain a load and on the other hand an elastically moveable perpendicular arm (21) of the aforesaid base (14), designed to allow the clipping and unclipping of the transversal crossbar (10) corresponding to the second structure (4)

5. Wheeled appliances propelled manually by means of extended shafts used as handles, used to transport loads of the wheelbarrow type according to the previous claim, are **characterized by** the fact that the said perpendicular arm at the base contains a part (21) perpendicular to the afore said base (17) mounted by a pair of angled plates (12,13), symmetrically positioned in relation to the central, longitudinal axis of the appliance. Forming a guiding surface for the crossbar (10) of the other structure (4) towards the sections (15,16) parallel with the base (17) linking the afore said plates (12,13) and the afore said perpendicular part (21) to the base (17) and aimed at locking the link.

6. Wheeled appliances propelled manually by means of extended shafts used as handles, used to transport loads of the wheelbarrow type according to previous claim, **characterized by** the perpendicular parts (21) and parallel parts (15,16) at the base (17) as well as the afore said plates (12,13) are linked by rounded parts (18,19)

7. Wheeled appliances propelled manually by means of extended shafts used as handles, used to transport loads according to one of the claims 5 and 6 are **characterized by** the fact that the plates (12,13) are separated by a gap (14) which enables the insertion of any elongated tool between the two mechanically linked crossbars (8,10) which can be used as a lever allowing the locking of the link between the afore said crossbars (8,10) by temporarily distorting the flexible plate allowing the movement of the crossbar (8) of the first structure (2)

8. Wheeled appliances propelled manually by means of extended shafts used as handles, used to transport loads of the wheelbarrow type according to the claims 4 to 7 are **characterized by** the fact that the arm (21) perpendicular to the base (17) of the transversal crossbar (8) of the first structure (2) is centred with respect to the tubular element of the said structure (2) a space remaining at each of their axial extremities next to the tubular element, of a length equal at least to the diameter of the tube of the second structure (4).

9. Wheeled appliances propelled manually by means of extended shafts used as handles, used to transport loads of a wheelbarrow type, according to any one of the claims 1 to 8 are **characterized by** the fact that the transversal crossbar (10) of the second structure (4) works together with the crossbar of the locking mechanism (8) and has an 'L' shaped profile.

10. Wheeled appliances propelled manually by means of extended shafts used as handles, used to transport loads of a wheelbarrow type according to any one of the claims 1 to 9 is **characterized by** the fact that the crossbars (8,10,7,9) are made of sheet metal.
